**Europäisches Patentamt**

**European Patent Office**

**Office européen des brevets**

(19)

(11) Publication number : **0 325 042 B1**

# EUROPEAN PATENT SPECIFICATION

(12)

(45) Date of publication of patent specification :
04.03.92 Bulletin 92/10

(51) Int. Cl.⁵ : **F23C 11/02, F28D 13/00, F28C 3/16**

(21) Application number : **88311934.9**

(22) Date of filing : **16.12.88**

(54) **Fluidized bed reactor.**

(30) Priority : **21.12.87 US 135814**

(43) Date of publication of application :
**26.07.89 Bulletin 89/30**

(45) Publication of the grant of the patent :
**04.03.92 Bulletin 92/10**

(84) Designated Contracting States :
**ES GB IT NL SE**

(56) References cited :
**EP-A- 0 061 326**
**EP-A- 0 199 655**
**WO-A-87/05687**
**FR-A- 2 417 336**
**US-A- 4 338 283**

(73) Proprietor : **FOSTER WHEELER ENERGY CORPORATION**
**Perryville Corporate Park**
**Clinton New Jersey 08809-4000 (US)**

(72) Inventor : **Alliston, Michael Gerard**
**24 Field Lane**
**Denville, New Jersey 07834 (US)**
Inventor : **Campbell, Walter Robert**
**1659 Porter Road**
**Union, New Jersey 07083 (US)**

(74) Representative : **Hitchcock, Esmond Antony et al**
**Lloyd Wise, Tregear & Co. Norman House**
**105-109 Strand**
**London WC2R 0AE (GB)**

EP 0 325 042 B1

## Description

This invention relates to a fluidized bed reacher in which heat is transferred from hot particulate material which flows through a plurality of chambers.

Various types of reactors, such as steam generators, or the like, utilize a fluidized bed as the primary medium of heat transfer. In these arrangements, air is passed through a bed of particulate material to fluidize the bed.

The most typical fluidized bed combustion system is commonly referred to as a "bubbling" fluidized bed in which a bed of particulate materials is supported by an air distribution plate, to which combustion-supporting air is introduced through a plurality of perforations in the plate, causing the material to expand and to take on a suspended, or fluidized, state. The gas velocity is typically two to three times that needed to develop a pressure drop which will support the bed weight (e.g., minimum fluidization velocity), causing the formation of bubbles that rise up through the bed and give it the appearance of a boiling liquid. The bed exhibits a well-defined upper surface, and the entrainment of particles in the gas leaving the bed is quite low, such that collection and recycle of these particles is not always necessary. The heat and mass transfer properties of the two-phase mixture are high, being typical of a liquid.

In these type arrangements, heat exchange surfaces are often immersed in the bed of fluidized particulate material to remove heat from the material and utilize the heat for other purposes. When such an immersed heat exchanger is used, it is often desirable to be able to control the rate at which the heat is extracted. This is usually done by varying the fluidized bed height and therefore the quantity of surface that is immersed.

However, situations exist in which a sufficient degree of freedom in choosing bed height is not available, such as for example, when a minimum fluidized bed solids pressure is required for reasons unrelated to heat transfer. In this case, the heat transfer may be controlled by diverting a portion of the particulate material which is then cooled so it does not contact the heat exchanger. When the correct portions of cooled and uncooled material are subsequently recombined, the desired final material temperature may be obtained. For example, different type valves, such as "plug valves" and "L valves," have been used to bleed a portion of the solids passing through the bed and/or to directly control the flow rates from both a heat exchanger bed and a material-pressure control bed. However, these type arrangements often adversely affect the functional integrity of other system aspects, such as, for example, the attainment of a required minimum fluidized bed material pressure.

In EP-A-0,199,655 and US-A-4,338,283 fluidized bed heat exchange apparatus are disclosed in which adjacent fluidizing chambers are defined, and between which fluidized material flows. In the apparatus of EP-A-0,199,655, particulate fuel material is fed to one chamber at a relatively low level, and allowed to flow from the fluidized bed therein to the bed formed in the adjacent chamber in which a heat exchange device is disposed. This flow is through a lower opening in a partition wall separating the chambers. The material is returned to the first mentioned chamber through an upper opening in the partition wall, and is discharged from the first mentioned chamber through an overflow duct. The upper opening and the overflow duct are both disposed above the level at which the fuel material is delivered. In an alternative apparatus the material is allowed to discharge directly from the second mentioned chamber.

The present invention is directed at a design of fluidized bed reactor which enables the amount of heat extracted from the fluidized bed to be controlled without having to vary the height of the fluidized bed. In a reactor of the invention, the heat extraction rate can be controlled by diverting a portion of the materials from heat exchanger without the problems normally associated therewith, for example, by bypassing a portion of the particulate material away from the heat exchanger and subsequently recombining it with the portion in contact with the heat exchanger.

A fluidized bed reactor according to the present invention comprises a housing divided by partitions into a first chamber and a plurality of additional chambers with heat exchange means disposed in one of the additional chambers; a grate disposed in all of the additional chambers for supporting particulate fuel material; means for introducing air to each additional chamber to fluidize particulate material therein; means for introducing particulate fuel material into one of the additional chambers, first passage means for permitting such material from said one additional chamber to flow to the other additional chambers; and second passage means for permitting such material to flow from said other additional chambers to the first chamber, with outlet means extending from the first chamber for discharge of material from the housing.

Thus, one of the additional chambers has the heat exchange device, and the other additional chambers are used to control the quantity of the particulate material exposed to the heat exchange surface, and the material in the additional chambers is permitted to flow into the first chamber when the level in the additional chambers exceeds a predetermined height.

An embodiment of the invention will now be described by way of example and with reference to the accompanying drawings wherein:

Figure 1 is a sectional view of the fluidized bed reactor of the present invention;

Fig. 2 is a cross-sectional view taken along the line 2-2 of Fig. 1;

Fig. 3 is a top plan view of the reactor of Fig. 1,; and

Fig. 4 is an enlarged, partial, perspective view depicting the partitions utilized in the reactor of Fig. 1.

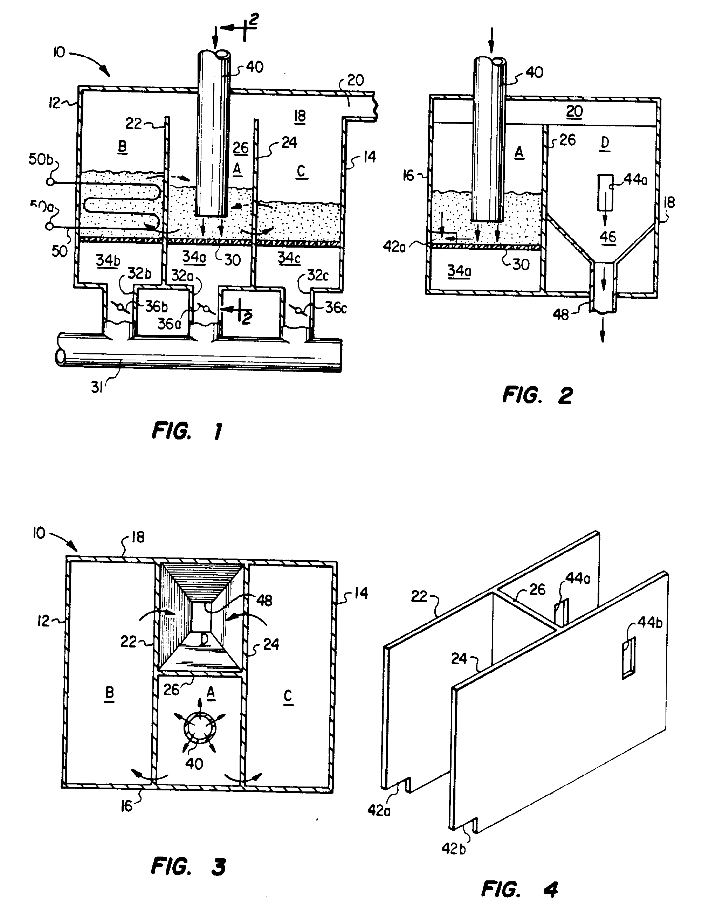

Referring to Figs. 1-3 of the drawings, the reference numeral 10 refers in general to the reactor of the present invention which includes a vessel, or housing, formed by a front wall 12, a rear wall 14, and two side walls 16 and 18 (Fig. 2). An outlet opening 20 is provided in the upper portion of the wall 14 for permitting gases to pass from the reactor, as will be explained.

A pair of spaced, parallel partitions 22 and 24 extend between the side walls 16 and 18, and a partition 26 (Figs. 2 and 3) extends between the partitions 22 and 24 to divide the housing into four chambers, A, B, C, and D. Chamber D extends immediately behind chamber A, and chambers B and C extend to the sides of chambers A and B as better shown in Fig. 3.

A perforated grate 30 extends horizontally in the lower portion of the housing between the walls 12 to 14 and from the sidewall 16 to the partition 26.

An air conduit 31 is disposed below the lower end of the housing and communicates with three ducts 32a, 32b and 32c which distribute air into three plenums 34a, 34b and 34c disposed immediately below the grate below the chambers A, B and C, respectively.

Control valves 36a, 36b and 36c are disposed in the conduits 32a, 32b and 32c, respectively, to control the flow of air from the conduit 30 into the air plenums 34a, 34b and 34c and therefore into the chambers A, B, and C, respectively.

A particulate fuel inlet pipe 40 extends from an external source (not shown) into and through chamber A, with its outlet end portion extending just above the grate 30. Particulate material, preferably in the form of discrete particles of fuel material, such as bituminous coal can thus be continuously fed into chamber A via the conduit 40. It is understood that a sulphur adsorbent, such as limestone, can be introduced to the chamber A in a similar manner via the conduit 40 or, alternately, via another feeder (not shown) with the adsorbent material functioning to absorb the sulphur generated by the burning coal, in a conventional manner.

As better shown in Fig. 4, the lower portions of those portions of the partitions 22 and 24 defining the chamber A have openings, or notches 42a and 42b, respectively, formed therethrough to permit the particulate fuel material to flow from the chamber A into the chambers B and C.

A pair of weir-type openings 44a and 44b are provided in those portions of the partitions 22 and 24 which define the chamber D to permit the particulate material in the chambers B and C to overflow into the chamber D in the event the buildup of particulate materials in chambers B and C exceeds a predetermined height. A hopper portion 46 is provided in the lower portion of the chamber D which communicates with an outlet conduit 48 for permitting the particulate fuel material in the chamber D to exit from the reactor.

A heat exchanger, shown in general by the reference numeral 50, is disposed in the chamber B and consists of one or more tube bundles, one tube of which is shown by the reference numeral 50. The tube 50 has an inlet 50a connected to a source of cooling fluid, such as water, and an outlet 50b for passing the water to external equipment after the water has passed through the chamber B and thus extracted heat from the fluidized bed in the latter chamber.

In operation, particulate fuel material is introduced into the chamber A via the inlet conduit 40, it being understood that adsorbent material can also be introduced into the chamber in a similar manner. The air dampers 36a, 36b and 36c are opened as desired to permit fluidizing air to pass upwardly through the air plenums 34a, 34b and 34c and through the perforated grate 30 and into the chambers A, B and C, respectively. The air thus fluidizes the particulate material in the chambers A, B & C, with the velocity of the air and therefore the degree of fluidization and the resultant height of the material in the chambers being controlled as needed by varying the position of the dampers 36a, 36b and 36c. The particulate material accumulating in the chamber A passes through the openings 42a and 42b in the partitions 22 and 24 respectively, and into the chambers B and C, respectively.

A light-off burner or the like (not shown) is disposed in the chamber B and is fired to ignite the particulate material in the latter chamber with the air introduced in the chamber promoting the combustion. The air, plus the gaseous products of combustion, pass to the upper portion of the chamber B where they exit through the outlet 20. The fuel material builds up in chambers A, B and C and, if the height of the material exceeds the height of the weir openings 44a and 44b, the material will overflow into the chamber D and exit via the outlet 48.

The velocity of the air entering the chamber A is controlled by the damper 36a to fluidize the particulate material in the bed at a value that is considered to be optimum for providing a pressure seal for the conduit 40. The air velocity entering the beds in the chambers B and C is controlled by the dampers 36b and 36c according to heat transfer control requirements. Since the fluidizing velocity in the chambers B and C will usually be different from that in Chamber A, the material in the chambers B and C will have different densities. Since the particulate material communicates between the chambers A and B and between the chambers A and C through the openings 42a and 42b, the beds will operate at different heights. The exit weirs 44a and 44b will therefore discharge quantities of material from the chambers B and C, respectively, into the chamber D that depend upon the expanded bed heights attained in chambers B and C. In this manner, the fraction of the total material flow that passes through the chambers B and C is controlled by varying the fluidized velocities in the latter beds.

It is thus seen that several advantages result from the foregoing. For example, the heat extraction rate from the fluidized bed in the chamber B is controlled by varying the air velocity in the chambers B and C. Also, the reactor of the present invention can be easily started up providing an uncooled flow path for the particulate fuel material during startup. Also, the solids exit from the reactor of the present invention via the conduit 48 while avoiding backflow or backsplashing. Further, a sufficient height of particulate fuel material in the chamber A is assured to provide a pressure seal for the inlet conduit 40. Also, since there will be a pressure loss associated with the flow of the particulate material through the openings 42a and 42b, the backpressure of the bed in the chamber A will be greater than that in chambers B and C to further assure the integrity of the pressure seal provided by the fluidized bed in chamber A.

**Claims**

1. A fluidized bed reactor (10) comprising a housing divided by partitions (22,24,26) into a first chamber (D) and a plurality of additional chambers (A,B,C) with heat exchange means (50) disposed in one of the additional chambers; a grate (30) disposed in all of the additional chambers for supporting particulate fuel material; means (31-36) for introducing air to each additional chamber to fluidize particulate material therein; means (40) for introducing particulate fuel material into one (A) of the additional chambers, first passage means (42) for permitting such material from said one additional chamber (A) to flow to the other additional chambers (B,C); and second passage means (44) for permitting such material to flow from said other additional chambers (B,C) to the first chamber (D), with outlet means (48) extending from the first chamber for discharge of material from the housing.

2. A reactor according to Claim 1 wherein the first passage means comprises openings (42a,42b) formed in lower portions of partitions (22,24) between the respective chambers.

3. A reactor according to Claim 1 or Claim 2 wherein the second passage means comprises weirs (44a,44b) formed in upper portions of a portion of partitions (22,24) between respective chambers whereby material flow from the other additional chambers (B,C) to the first chamber is in response to the height of material in the other additional chambers exceeding a predetermined value.

4. A reactor according to any preceding Claim wherein there are three additional chambers and the partitions (A,B,C) are arranged so that the first chamber (D) extends behind said one additional chamber (A) and shares a common partition (26) therewith, and the other additional chambers (B,C) are disposed on opposite sides of the first chamber (D) and said one additional chamber (A), sharing common partitions (22,24) therewith.

**Patentansprüche**

1. Wirbelschichtreaktor (10) aufweisend ein Gehäuse, das durch Trennwände (22, 24, 26) in eine erste Kammer (D) und mehrere weiterer Kammern (A, B, C) mit in einer der weiteren Kammerm angeordneter Wärmeaustauscheinrichtung (50) unterteilt ist; einen Rost (30), der in sämtlichen weiteren Kammern zum Tragen aus Partikeln bestehenden Brennstoffmaterials angeordnet ist; Einrichtungen (31 bis 36) zum Einleiten von Luft in jede weitere Kammer zur Fluidisierung von aus Partikeln bestehendem Material darin; Einrichtungen (40) zum Eintragen von aus Partikeln bestehendem Brennstoffmaterial in eine (A) der weiteren Kammern, eine erste Stromübergangseinrichtung (42), die die Strömung solchen Materials von dieser einen weiteren Kammer (A) zu den anderen weiteren Kammern (B, C) gestattet; und eine zweite Stromübergangseinrichtung (44), die die Strömung solchen Materials aus diesen anderen weiteren Kammern (B, C) zur ersten Kammer (D) gestattet, wobei sich eine Auslaßeinrichtung (48) zum Austrag von Material aus dem Gehäuse von der ersten Kammer erstreckt.

2. Reaktor nach Anspruch 1, in welchem die erste Stromübergangseinrichtung Öffnungen (42a, 42b) umfaßt, die in unteren Abschnitten von Trennwänden (22, 24) zwischen den jeweiligen Kammern ausgebildet sind.

3. Reaktor nach Anspruch 1 oder Anspruch 2, in welchem die zweite Stromübergangseinrichtung Wehre (44a, 44b) umfaßt, die in oberen Abschnitten eines Teils von Trennwänden (22, 24) zwischen den jeweiligen Kammern ausgebildet sind, wodurch Materialströmung von den anderen weiteren Kammern (B, C) zur ersten Kammer in Abhängigkeit davon vorliegt, daß die Materialhöhe in den anderen weiteren Kammern einen vorbestimmten Wert übersteigt.

4. Reaktor nach einem vorhergehenden Anspruch, in welchem drei weitere Kammern vorliegen und die Trennwände (A, B, C) so angeordnet sind, daß sich die erste Kammer (D) hinter dieser einen weiteren Kammer (A) erstreckt und eine gemeinsame Trennwand (26) mit dieser teilt und daß die anderen weiteren Kammern (B, C) auf entgegengesetzten Seiten der ersten Kammer (D) und dieser einen weiteren Kammer (A) angeordnet sind, wobei sie mit diesen gemeinsame Trennwände (22, 24) teilen.


## Revendications

1. Réacteur (10) à lit fluidisé, comprenant une enceinte divisée par des cloisons (22,24,26) en une première chambre (D) et plusieurs chambres supplémentaires (A,B,C) avec des moyens (50) d'échange de chaleur disposés dans l'une des chambres supplémentaires ; une grille (30) disposée dans toutes les chambres supplémentaires pour supporter une matière combustible particulaire ; des moyens (31-36) pour introduire de l'air dans chaque chambre supplémentaire pour y fluidiser une matière particulaire ; un moyen (40) pour introduire une matière combustible particulaire dans l'une (A) des chambres supplémentaires, un premier moyen de passage (42) pour permettre à une telle matière provenant de ladite chambre supplémentaire (A) de s'écouler dans les autres chambres supplémentaires (B,C) ; et un second moyen de passage (44) pour permettre à une telle matière de s'écouler à partir desdites autres chambres supplémentaires (B,C) dans la première chambre (D), avec des moyens de sortie (48) s'étendant à partir de la première chambre pour décharger de la matière hors de l'enceinte.

2. Réacteur selon la revendication 1, dans lequel le premier moyen de passage comprend des ouvertures (42a,42b) formées dans des parties inférieures des cloisons (22,24) entre les chambres respectives.

3. Réacteur selon la revendication 1 ou la revendication 2, dans lequel le second moyen de passage comprend des déversoirs (44a,44b) formés dans des parties supérieures d'une partie des cloisons (22,24) entre les chambres respectives, ce par quoi l'écoulement de matière à partir des autres chambres supplémentaires (B,C) dans la première chambre s'effectue en réponse à la hauteur de la matière dans les autres chambres supplémentaires dépassant une valeur prédéterminée.

4. Réacteur selon l'une quelconque des revendications précédentes, dans lequel il y a trois chambres supplémentaires et les cloisons (A,B,C) sont disposées de sorte que la première chambre (D) s'étende derrière ladite chambre supplémentaire (A) et a la cloison (26) en commun avec elle, et les autres chambres supplémentaires (B,C) sont disposées de part et d'autre de la première chambre (D) et de ladite chambre supplémentaire (A), en ayant les cloisons (22, 24) en commun avec elles.

FIG. 1

FIG. 2

FIG. 3

FIG. 4